# EUROPEAN PATENT APPLICATION

(11) **EP 3 141 777 A1**
(43) Date of publication of application: **15.03.2017**
(21) Application number: 14891223.1
(22) Date of filing: 08.05.2014
(51) Int. Cl.: F16H 1/32

(54) **WAVE GENERATOR FOR WAVE GEAR DEVICE AND PRODUCTION METHOD FOR WAVE GENERATOR**

(71) Applicant: Harmonic Drive Systems Inc., Shinagawa-ku Tokyo 140-0013 (JP)
(72) Inventor: KIYOSAWA Yoshihide, Azumino-shi Nagano 399-8305 (JP)
(74) Representative: Klunker . Schmitt-Nilson . Hirsch
(86) International application number: PCT/JP2014/062407
(87) International publication number: WO 2015/170391

(57) **Abstract**

In this wave generator (5) for a strain wave gearing (1), a plug (6) thereof is configured from a plurality of split plug segments (12-14) that are joined in the axial direction. Wave gearings (8-10) are installed to the split outer peripheral surfaces (12a-14a) of the split plug segments (12-14) by press fitting, and thereafter the split plug segments (12-14) can be joined in the axial direction. It is possible to easily produce the wave generator (5) in which a plurality of wave bearings (8-10) are press fitted, in parallel arrangement, on the non-circular outer peripheral surface (7).

## Description

### TECHNICAL FIELD

The present invention relates to a wave generator for a strain wave gearing, and to a method for producing same. More particularly, the invention relates to a wave generator suited to use in strain wave gearings known as flat type strain wave gearings, and to a method for producing same.

### BACKGROUND ART

A flat type strain wave gearing is provided with two rigid internally toothed gears arranged coaxially in parallel, a flexible externally toothed gear of cylindrical shape arranged coaxially to the inside thereof and capable of flexing in a radial direction, and a wave generator for flexing the flexible externally toothed gear to non-circular shape, e.g., ellipsoidal shape, to partially mesh with the two rigid internally toothed gears. The number of teeth of one of the rigid internally toothed gears exceeds that of the flexible externally toothed gear, and a speed-reducing action reflecting the difference in number of teeth takes place between these two gears. The number of teeth of the other rigid internally toothed gear is equal to that of the flexible externally toothed gear, and these gears rotate integrally with each other. When the rigid internally toothed gear having the greater tooth count is immobilized and the wave generator is caused to rotate using a motor or the like, the flexible externally toothed gear rotates at reduced speed, and this reduced-speed rotation is outputted to the load side from the rigid internally toothed gear having the smaller tooth count, which rotates integrally with the flexible externally toothed gear.

Patent Document 1 discloses a flat type strain wave gearing of this configuration. The wave generator of the strain wave gearing disclosed in the document in question is equipped, on the outer peripheral surface of the ellipsoidal shape of a plug, which is a rigid body, with three ball bearings pressure-fit in parallel, as wave bearings. The ball bearings at either side support sections at either side in the tooth width direction of the external teeth of the flexible externally toothed gear, while the center ball bearing supports a section located in the center with respect to the tooth width direction of the external teeth.

Thus, by supporting a flexible externally toothed gear of cylindrical shape comprising a thin-walled, elastic body using a plurality of ball bearings arranged in the tooth width direction of the external teeth, the distribution of stress acting on sections in the tooth width direction of the flexible externally toothed gear can be made uniform. In so doing, the life of the flexible externally toothed gear can be extended.

### PRIOR ART DOCUMENTS

### PATENT DOCUMENTS

Patent Document 1: JP 2013-181636 A

### SUMMARY OF INVENTION

### TECHNICAL PROBLEM

In this instance, the wave generator is configured from a plug, which is a rigid body provided with an ellipsoidal outer peripheral surface, and ball bearings which have been pressure-fit into the outer peripheral surface of the plug. Increasing the number of ball bearings which are pressure-fitted into the outer peripheral surface further complicates the procedure for pressure fitting same.

For example, when multiple ball bearings are used, concerns related to the production cost standpoint dictate using ball bearings of the same size. The operation for pressure fitting the second ball bearing after the first ball bearing has been pressure-fit onto the plug outer peripheral surface is more difficult than the procedure for pressure-fitting the first ball bearing, and the pressure fitting surface may get scratched in some instances. The procedure for pressure-fitting three or more ball bearings into the same plug outside peripheral surface is particularly difficult, and damage to the pressure fitting surface is likely.

In view of this point, it is an object of the present invention to provide a wave generator with which a plurality of wave bearings can be installed in a process-friendly and inexpensive manner on a non-circular outer peripheral surface of a plug, which is a rigid body, and to propose a production method for the wave generator.

### SOLUTION TO PROBLEM

To solve the aforementioned problems, according to the present invention, there is provided a wave generator for flexing a flexible externally toothed gear of a strain wave gearing into non-circular shape, the wave generator being characterized by comprising:
a plug, which is a rigid body;
a non-circular outer peripheral surface formed on the plug; and
at least three wave bearings installed on the non-circular outer peripheral surface; wherein
the plug is provided with at least two split plug segments that are joined in the axial direction thereof;
the non-circular outer peripheral surface is defined by split outer peripheral surfaces that are formed on the respective split plug segments;
at least one of the wave bearings is installed on each of the split outer peripheral surfaces; and
in the event that the number of the wave bearings exceeds the number of the split plug segments, two of the wave bearings are installed on at least one of the non-circular outer peripheral surfaces.

The plug in the wave generator of the present invention is configured from a plurality of split plug segments which are split in the axial direction. Consequently, wave bearings can be installed by pressure fitting on the split outer peripheral surfaces of the split plug segments, and the split plug segments can subsequently be joined in the axial direction. Therefore, a wave generator in which a plurality of wave bearings are pressure-fitted in a parallel state to the non-circular outer peripheral surface of a plug can be efficiently produced.

In order to reliably pressure fit wave bearings to the split plug segments in a process-friendly manner, it is necessary for there to be a maximum of two wave bearings pressure-fit into the split outer peripheral surface of any single split plug segment.

Consequently, when there are two split plug segments and three wave bearings, two of the wave bearings will be installed on one of the split outer peripheral surface of one of the split plug segments, and one of the wave bearings will be installed on the other of split outer peripheral surface of the other of the split plug segments.

When there are three split plug segments and three wave bearings, one of the wave bearings will be installed on each of the split outer peripheral surfaces the split plug segments.

In order to lower the cost of producing a wave generator equipped with a plurality of wave bearings, it is preferable for the split outer peripheral surfaces to be outer peripheral surfaces that are identical in size, and for the wave bearings to be wave bearings that are identical in size.

In this case, there may be production variation among the plurality of wave bearings, and the speed of revolution of the rolling elements may differ among the wave bearings. Consequently, there is a risk that when a shared rolling element retainer is employed by a plurality of wave bearings, the rolling element retainer may get damaged. For this reason, it is preferable for each of the wave bearings to be provided with its own independent rolling element retainer.

The split plug segments can be joined to one another by any one joining technique from among bolting, welding, bonding, splining, pinning, and riveting, or by any two or more of these in combination.

Next, the present invention is directed to a method for producing a wave generator of the aforedescribed configuration, the method being characterized by comprising:
a plug segment fabrication step for fabricating the split plug segments;
a bearing installation step for installing one or two of the wave bearings on each of the split outer peripheral surfaces of the fabricated split plug segments; and
a plug segment joining step for coaxially joining the split plug segments on which the wave bearings are installed.

The wave generator of the present invention is suitable for use in strain wave gearings equipped with a flexible externally toothed gear of cylindrical shape.

### BRIEF DESCRIPTION OF DRAWINGS

FIG. 1 is an end view and a longitudinal sectional view showing a strain wave gearing equipped with a wave generator to which the present invention has been applied;
FIG. 2 is a diagram illustrating the production method of the wave generator of FIG. 1;
FIG. 3 is a half longitudinal sectional view showing another example of a wave generator to which the present invention has been applied; and
FIG. 4 is a half longitudinal sectional view showing yet another example of a wave generator to which the present invention has been applied.

### DESCRIPTION OF EMBODIMENTS

An embodiment of the strain wave gearing equipped with a wave generator to which the present invention is applied will be described below, making reference to the accompanying drawings.

### (Overall configuration)

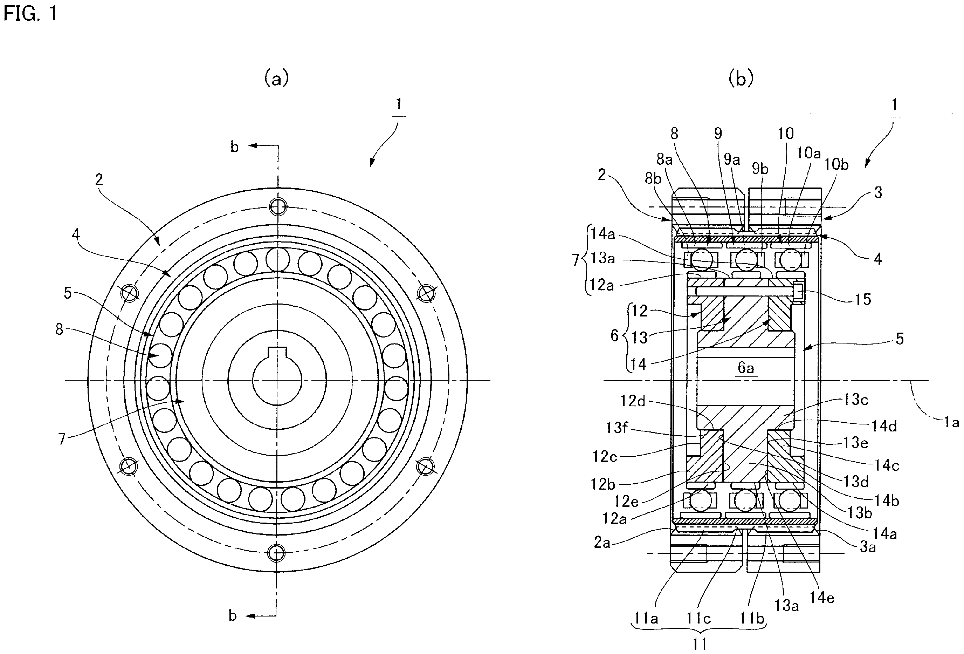

FIG. 1(a) is an end view of a strain wave gearing according to the present embodiment, and FIG. 1(b) is a longitudinal sectional view of a section taken along line b-b thereof. The strain wave gearing 1 is one of a design referred to as a "flat type strain wave gearing," which is equipped with first and second rigid internally toothed gears 2, 3 that are coaxially arranged in parallel, a cylindrically shaped, flexible externally toothed gear 4 arranged coaxially to the inside of the first and second rigid internally toothed gears 2, 3 and being formed from a thin-walled elastic body, and a wave generator 5 of ellipsoidal contour fitted to the inside of the flexible externally toothed gear 4.

The flexible externally toothed gear 4 is flexed into an ellipsoidal shape by the wave generator 5, and meshes locally with the first and second rigid internally toothed gears 2, 3. When the wave generator 5 is rotatably driven by a motor or the like, the site where the flexible externally toothed gear 4 and the first and second rigid internally toothed gears 2, 3 mesh moves in the circumferential direction.

The number of teeth of the first rigid internally toothed gear 2 is greater by 2n (where n is a positive integer) than that of the flexible externally toothed gear 4, and a speed-reducing action reflecting the difference in the number of teeth takes place between these two gears 2, 4. The number of teeth of the second rigid internally toothed gear 3 is equal to that of the flexible externally toothed gear 4, and these gears 3, 4 rotate integrally with each other. When the first rigid internally toothed gear 2 having the greater tooth number is immobilized and the wave generator 5 is caused to rotate by the motor or the like, the flexible externally toothed gear 4 rotates at reduced speed, and this reduced-speed rotation is outputted to the load side from the second rigid internally toothed gear 3, which rotates integrally with the flexible externally toothed gear 4.

The wave generator 5 is equipped with a plug 6, which is a rigid body, and three wave bearings 8, 9, 10, which are installed (pressure-fit) onto an ellipsoidal outer peripheral surface 7 of the plug 6. A plug shaft hole 6a centered on the device axis 1a is formed in a center section of the plug 6, and a rotating input shaft (not illustrated), such as a motor shaft or the like, is passed coaxially therethrough, and connected and secured thereto. The ellipsoidal outer peripheral surface 7 of the plug 6 is identical in diameter at each location in the axial direction, and the wave bearings 8-10 installed at these locations are ball bearings of identical size.

The wave bearings 8-10 are installed on the ellipsoidal outer peripheral surface 7 of the plug 6, and the outer peripheral surfaces of outer races 8a-10a thereof are flexed into an ellipsoidal shape. Therefore, the flexible externally toothed gear 4, which is supported by the outer races 8a-10a, is flexed into an ellipsoidal shape as well.

Here, in this example, the external teeth 11 of the flexible externally toothed gear 4 are provided with a first external tooth section 11a that faces the internal teeth 2a of the first rigid internally toothed gear 2, a second external tooth section 11b that faces the internal teeth 3a of the second rigid internally toothed gear 3, and a relief section 11c formed therebetween. Through appropriate setting of the length of the relief section 11c in the tooth width direction, and of the relief in the tooth depth direction, the tooth surface load distribution in the tooth width direction of the external teeth 11 can be flattened, and excellent tooth contact in relation to the internal teeth 2a, 3a can be produced in the tooth width direction. This allows the load capacity of the strain wave gearing 1 to be increased.

The wave bearing 8 of the strain wave gearing 5 supports the first external tooth section 11a, and the wave bearing 10 supports the second external tooth section 11b. The wave bearing 9, which is arranged between the wave bearings 8, 10, supports the relief section 11c, and tooth sections of the first and second external tooth sections 11a, 11b, the tooth sections being continuous with the relief section. Each of the wave bearings 8-10 is equipped with a mutually independent ball retainer 8b-10b.

### (Wave generator plug)

The plug 6 of the wave generator 5 is configured from three annular split plug segments 12, 13, 14, which are joined in the axial direction. The outer peripheral surfaces of the split plug segments 12-14 are split outer peripheral surfaces 12a-14a obtained by splitting the ellipsoidal outer peripheral surface 7. The split plug segments 12-14 are joined coaxially by a plurality of fastening bolts 15 attached at prescribed spacing in the circumferential direction, forming the plug 6, and the split outer peripheral surfaces 12a-14a thereof form the ellipsoidal outer peripheral surface 7 of the plug 6.

The split plug segments 12-14 can be joined to one another through bolting, welding, bonding, splining, pinning, riveting, or the like. It is possible for the joining strength to be enhanced through the concomitant use of these joining methods.

The centrally located plug split segment 13 is equipped with a disk-shaped section 13b of fixed width, and a cylindrical boss section 13c formed in an inner peripheral section of the disk-shaped section 13b. The outer peripheral surface of the disk-shaped section 13b serves as a split outer peripheral surface 13a, and the wave bearing 9 is installed at this location. The plug shaft hole 6a is defined by the inner peripheral surface of the boss section 13c. End surfaces 13d, 13e at either side of the disk-shaped section 13b constitute flat surfaces that are orthogonal to the device axis 1a, and the outer peripheral surface of the boss section 13c constitutes a circular outer peripheral surface 13f centered on the device axis 1a.

The split plug segments 12, 14 located to either side of the plug split segment 13 have left-right symmetrical shapes, and are equipped with broad-width outer peripheral-side disk sections 12b, 14b, narrow-width inner peripheral-side disk sections 12c, 14c, and circular through-holes 12d, 14d, which pass through central sections of the inner peripheral-side disk sections 12c, 14c. The end surfaces 12a, 14e of the split plug segments 12, 14 at the sides thereof facing the plug split segment 13 are constituted as flat surfaces orthogonal to the device axis 1a.

The circular through-holes 12d, 14d of the split plug segments 12, 14 are installed on the boss section 13c of the center plug split segment 13, and the end surfaces 12e, 14e are brought into contact with the end surfaces 13d, 13e of the plug split segment 13. The three split plug segments 12-14 are thereby coaxially superimposed, in which state the split plug segments 12-14 are securely fastened by fastening bolts 15.

### (Wave generator production procedure)

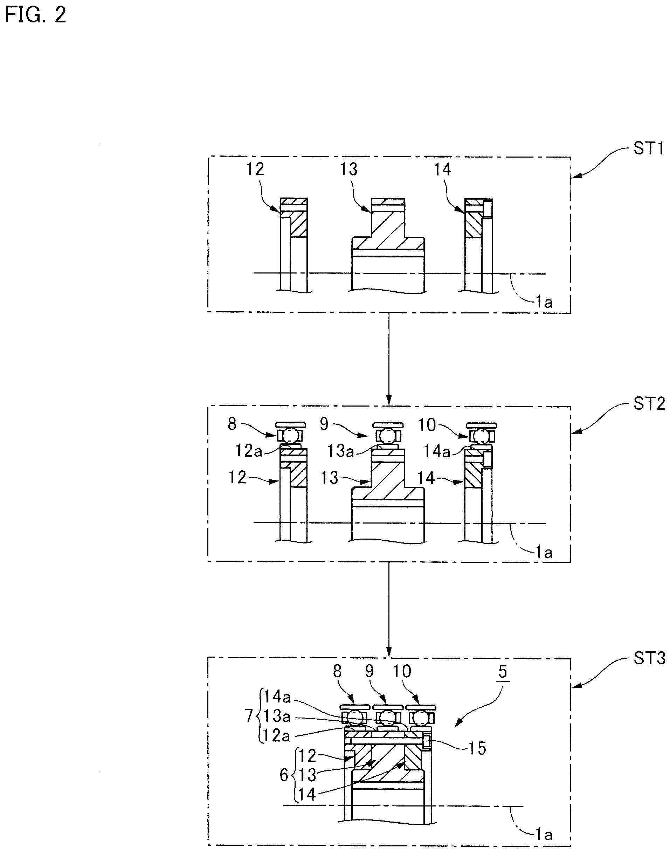

FIG. 2 is a descriptive diagram showing the procedure for producing a wave generator 5. First, each of the split plug segments 12-14 is prepared (plug segment fabrication step ST1). Next, the wave bearings 8-10 are pressure-fitted onto the respective split outer peripheral surfaces 12a-14a of the split plug segments 12-14 (bearing installation step ST2). Thereafter, the split plug segments 12-14 on which the wave bearings 8-10 have been installed are superimposed in the axial direction coaxially, and securely fastened by fastening bolts 15. A wave generator 5 having the three wave bearings 8-10 pressure-fitted on the ellipsoidal outer peripheral surface 7 of the plug 6 is thereby obtained.

### (Effects)

Thus, in the wave generator 5, it is unnecessary to secure three wave bearings by pressure-fitting to the ellipsoidal outer peripheral surface of a plug in the form of a single component. Therefore, a wave generator configured such that a plurality of wave bearings 8-10 are secured by pressure fitting to the ellipsoidal outer peripheral surface 7 of the plug 6, which is a rigid body, can be produced in an improved workability, without damaging the ellipsoidal outer peripheral surface 7.

Moreover, there is no need to modify the respective sizes of the wave bearings 8-10 in order to be able to easily secure the three wave bearings 8-10 by pressure fitting to the ellipsoidal outer peripheral surface 7 of the plug 6. By employing wave bearings 8-10 of identical size, the cost of producing the wave generator 5 can be lowered.

Further, in the present example, the plug 6 is formed by joining the three split plug segments 12-14, whereby mutually independent ball retainers 8b-10b are arranged on the respective wave bearings 8-10. Specifically, due to production variation in the split plug segments 12-14, the revolution speed of the balls may differ among wave bearings pressure-fitted onto adjacent split plug segments. When a ball retainer is used in common by adjacent wave bearings, the ball retainer may get damaged. Since independent ball retainers 8b-10b are used in the present example, the risk of damage caused by variation in the production of the split plug segments 12-14 can be avoided.

### (Another example of wave generator)

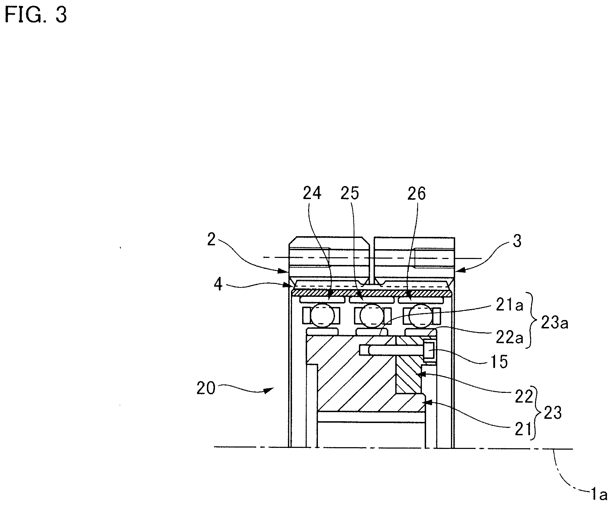

FIG. 3 is a half longitudinal sectional view showing another example of a wave generator 5. The wave generator 20 shown in this drawing is an example of a case in which the number of wave bearings exceeds the number of split plug segments. In this case, two of the wave bearings are installed on the split outer peripheral surface of at least one of the split plug segments.

In the wave generator 20 of FIG. 3, a plug 23 is configured from two split plug segments 21, 22, and an ellipsoidal outer peripheral surface 23a of the plug 23 is formed from ellipsoidal outer peripheral surfaces 21a, 22a of these split plug segments 21, 22. Three wave bearings 24, 25, 26 are installed on the ellipsoidal outer peripheral surface 23a of the plug 23. Specifically, the two wave bearings 24, 25 are installed on the ellipsoidal outer peripheral surface 21a of the split plug segments 21, and the wave bearings 26 is installed on the ellipsoidal outer peripheral surface of the other plug split segment 22.

The simplest approach is to install a single wave bearing on the ellipsoidal outer peripheral surface 21a of the plug split segment 21, which is a rigid body; however, where there are two wave bearings, it would also be possible to install these relatively easily through pressure fitting onto the ellipsoidal outer peripheral surface 21a. Consequently, it is also possible to employ the wave generator 20 shown in FIG. 3 in place of the wave generator 5 shown in FIGS. 1 and 2.

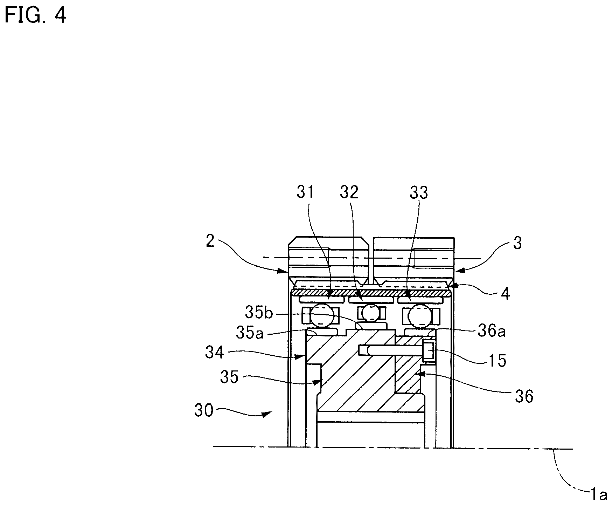

Next, FIG. 4 is a half longitudinal sectional view showing yet another example of a wave generator 5. The wave generator 30 shown uses, as the wave bearing 32 arranged at the center in the axial direction, one that is of smaller size than the wave bearings 31, 33 at either side. The plug 34 is configured from two split plug segments 35, 36. An ellipsoidal outer peripheral surface 35a for supporting the wave bearing 31, and an ellipsoidal outer peripheral surface 35b for supporting the wave bearing 32 having the smaller load capacity are formed on the outer peripheral surface of the one plug split segment 35. An ellipsoidal outer peripheral surface 36a of the same dimensions as the ellipsoidal outer peripheral surface 35a is formed on the outer peripheral surface of the other plug split segment 36.

The center section in the tooth width direction of the flexible externally toothed gear 4 can provide support with a lower force than the sections at either side. Therefore, it is possible to employ the wave generator 30 shown in FIG. 4 in place of the wave generator 5 shown in FIGS. 1 and 2.

### (Another embodiments)

In the aforedescribed embodiments, the number of teeth of the second rigid internally toothed gear 3 and the flexible externally toothed gear 4 are the same. It is also possible to carry out a speed reduction operation between these gears 3, 4 by adopting different number of teeth for these gears 3, 4.

It is moreover possible for the flexible externally toothed gear to flex into a non-circular shape other than an ellipsoid. For example, the flexible externally toothed gear could flex to a tri-lobed shape, so as to be able to mesh with the rigid internally toothed gear at three locations in the circumferential direction. In this case, the difference in the number of teeth between the rigid internally toothed gears and the flexible externally toothed gear would be 3n (n = 0, 1, 2 ...).

In the aforedescribed flexible externally toothed gear 4, a relief section is formed in the tooth-width center section. The relief section is optionally omitted.

## Claims

1. A wave generator for flexing a flexible externally toothed gear of a strain wave gearing into a non-circular shape, the wave generator comprising:
a plug, which is a rigid body;
a non-circular outer peripheral surface formed on the plug; and
at least three wave bearings installed on the non-circular outer peripheral surface; wherein
the plug has at least two split plug segments that are joined in an axial direction thereof;
the non-circular outer peripheral surface is defined by split outer peripheral surfaces that are formed on the respective split plug segments;
at least one of the wave bearings is installed on each of the split outer peripheral surfaces; and
where the number of the wave bearings exceeds the number of the split plug segments, two of the wave bearings are installed on at least one of the non-circular outer peripheral surfaces.

2. The wave generator for the strain wave gearing according to claim 1, wherein
the number of the split plug segments is two;
the number of the wave bearings is three; and
two of the wave bearings are installed on the split outer peripheral surface of one of the split plug segments, and one of the wave bearings is installed on the split outer peripheral surface of the other of the split plug segments.

3. The wave generator for the strain wave gearing according to claim 1, wherein
the number of the split plug segments is three;
the number of the wave bearings is three; and
one of the wave bearings is installed on each of the split outer peripheral surfaces of the split plug segments.

4. The wave generator for the strain wave gearing according to any one of claims 1, 2 and 3, wherein
the split outer peripheral surfaces are identical in size; and
the wave bearings are identical in size.

5. The wave generator for the strain wave gearing according to claim 4, wherein
the wave bearings have rolling element retainers, respectively, the rolling element retainers being independent from one another.

6. The wave generator for the strain wave gearing according to any one of claims 1, 2 and 3, wherein
the split plug segments are joined to one another by either one or at least two of joining mechanisms selected from among bolting, welding, bonding, splining, pinning, and riveting.

7. A method for producing the wave generator of any one of claims 1 to 6, the method comprising:
a plug segment fabrication step for fabricating the split plug segments;
a bearing installation step for installing one or two of the wave bearings on each of the split outer peripheral surfaces of the fabricated split plug segments; and
a plug segment joining step for coaxially joining the split plug segments on which the wave bearings are installed.

8. A strain wave gearing comprising:
a first rigid internally toothed gear and a second rigid internally toothed gear that are coaxially arranged in parallel;
a cylindrical flexible externally toothed gear that is flexible in a radial direction and is arranged coaxially inside the first and second rigid internally toothed gears; and
a wave generator for flexing the flexible externally toothed gear into a non-circular shape to mesh partially with the first and second rigid internally toothed gears, wherein
the wave generator is one that is defined by any one of claims 1 to 7.
